Europäisches Patentamt

European Patent Office

Office européen des brevets

(11) Veröffentlichungsnummer: **0 223 088**

**A2**

(12) **EUROPÄISCHE PATENTANMELDUNG**

(21) Anmeldenummer: 86114533.2

(22) Anmeldetag: 21.10.86

(51) Int. Cl.⁴: **G01G 19/32**

(30) Priorität: 21.10.85 DE 3537426

(43) Veröffentlichungstag der Anmeldung:
27.05.87 Patentblatt 87/22

(84) Benannte Vertragsstaaten:
**AT BE CH DE ES FR GB GR IT LI LU NL SE**

(71) Anmelder: **Krämer, Wilhelm Ludwig
Salita Viarno 38
Viganello TI(CH)**

(72) Erfinder: **Der Erfinder hat auf seine Nennung
verzichtet**

(74) Vertreter: **Lehn, Werner, Dipl.-Ing. et al
Hoffmann, Eitle & Partner Patentanwälte
Arabellastrasse 4 (Sternhaus)
D-8000 München 81(DE)**

(54) **Kombinationswaage.**

(57) Eine Kombinationswaage weist mehrere Einzelwaagen (2) mit Wägebehältern (1) auf, deren Teilgewichtsportionen von einem Rechner ausgewählt kombiniert zur Bildung einer Gesamtgewichtsportion in einen Sammeltrichter (61, 62) abgegeben und von diesem einer Verpackungsmaschine zugeführt werden. Um übergewichtige Gesamtgewichtsportionen zu vermeiden und nicht in den Verpakkungsprozeß gelangen zu lassen sowie um gegebenenfalls einwandfreie Gesamtgewichtsportionen bei hohen Wägegeschwindigkeiten zu erhalten, sind unter den Wägebehältern (1) und über dem Sammeltrichter - (61, 62) Rutschen (3) angeordnet, die in wenigstens zwei Stellungen schwenkbar sind, in denen sie die Teilgewichtsportionen entweder in den Sammeltrichter (61, 62) oder auf ein neben diesem angeordnetes Fördermittel (7) abgeben.

Fig. 2

EP 0 223 088 A2

## KOMBINATIONSWAAGE

Die Erfindung bezieht sich auf eine Kombinationswaage mit mehreren Einzelwaagen mit Wägebehältern,- deren Teilgewichtsportionen von einem Rechner ausgewählt kombiniert zur Bildung einer Gesamtgewichtsportion in einen Sammeltrichter abgegeben und von diesem einer Verpakkungsmaschine zugeführt werden.

Bei bekannten derartigen Kombinationswaagen werden die meist zwischen neun und fünfzehn Einzelwaagen unmittelbar am oberen Rand eines Sammeltrichters angeordnet. Bei der Auswahl und Kombination der einzelnen Teilgewichtsportionen der Einzelwaagen zu einer Gesamtgewichtsportion durch den Rechner der Kombinationswaage kommt es immer wieder vor, daß die eine oder andere der Einzelwaagen eine längere Zeit nicht zur Erstellung einer Gesamtgewichtsportion herangezogen wird. Solche Einzelwaagen mit ihren zugehörigen Dosierrinnen werden dann ständig weiter bis zur Überfüllung gefüllt und fallen für die Heranziehung zur Kombination einer Gesamtgewichtsportion wegen des überhohen Gewichtsinhaltes in ihrem Wägebehälter völlig aus. Trägt auf diese Weise eine Einzelwaage zur Erstellung von Geamtgewichtsportionen nicht bei, so verringert sich beim Ausfall nur einer einzigen Einzelwaage die Anzahl der mög lichen Einzelgewichtsportionen um die Hälfte. Dementsprechend wird die erzielbare Genauigkeit des Gesamtportionsgewichtes herabgesetzt.

Um auf eine solche Weise aufgefallene Einzelwaagen dem Kombinationsprozeß wieder zuzuführen, also um alle in der Kombinationswaage vorhandenen Einzelwaagen möglichst bei jeder Kombination eines Gesamtportionsgewichtes zur Verfügung zu haben, werden bisher solche Einzelwaagen, wenn sie eine zeitlang wegen Übergewichtes bei der Kombinationserstellung ausgefallen sind, auch auf die Gefahr einer ungenauen Gesamtgewichtsportion hin zeitabhängig zwangsläufig zu einer Gesamtgewichtskombination verwendet, damit die fehlgefüllte Einzelwaage entleert wird und hierauf für die Erstellung von korrekten Gesamtportionsgewichten wieder zur Verfügung steht. Auf diese Weise entstehen von Zeit zu Zeit übergewichtige Gesamtgewichtsportionen, die zu Schwierigkeiten bei der weiteren Verarbeitung in der Verpackungsmaschine führen können.

Der Erfindung liegt die Aufgabe zugrunde, eine Kombinationswaage der eingangs beschriebenen Art zu schaffen, mit welcher eine gesteuerte Abgabe von Einzelgewichtsportionen aus länger nicht zur Kombination herangezogenen Einzelwaagen möglich ist, ohne daß diese in den weiteren Verpackungsprozeß gelangen.

Diese Aufgabe wird erfindungsgemäß dadurch gelöst, daß unter den Wägebehältern und über dem Sammeltrichter Rutschen angeordnet sind, und daß die Rutschen in wenigstens zwei Stellungen schwenkbar sind, in denen sie die Teilgewichtsportionen entweder in den Sammeltrichter oder auf ein neben dem Sammeltrichter angeordnetes Fördermittel abgeben.

Zweckmäßigerweise erfolgt dabei ein Schwenken jeder Rutsche in die Stellung über dem Fördermittel aus der Grundstellung über dem Sammeltrichter und Entleerung des zugehörigen Wägebehälters gesteuert durch den Rechner jeweils dann, wenn der betreffende Wägebehälter eine einstellbare Anzahl von Wägevorgängen nicht zur Abgabe seiner Teilgewichtsportion herangezogen worden ist.

Die auf das Fördermittel abgegebenen Teilgewichtsportionen gelangen als solche nicht in den weiteren Verpackungsprozeß in der nachgeordneten Verpackungsmaschine und können dementsprechend dort auch keine übergewichtigen Gesamtgewichtsportionen hervorrufen, welche zu Störungen in der Verpackungsmaschine führen könnten. Sie können vielmehr abgeführt und dem Wägevorgang erneut zu Beginn zugeführt werden.

Ein weiteres Problem besteht darin, daß bei Kombinationswaagen der in Frage stehenden Art, deren Einzelwaagen alle in einen Sammeltrichter ihre Teilgewichtsportionen abgeben, die Gesamtgewichtsportion durch nur eine Öffnung des Sammeltrichters aus der Kombinationswaage austreten muß. Diese Öffnungen sind darüber hinaus meistens noch mit einem Klappenverschluß oder ähnlichem versehen. Je mehr Einzelwaagen man anordnet, desto mehr Gesamtgewichtsportionen können je Zeiteinheit hergestellt werden. Bei einer Produktion von 100 und mehr Gewichtsportionen je Minute stehen beispielsweise nur 0,6 Sekunden und weniger für das Austreten einer Gesamtgewichtsportion aus der Sammeltrichteröffnung zur Verfügung. Bei schlecht fließenden Wägegütern ist dies zu wenig Zeit; die einzelnen Gesamtgewichtsportionen gehen ineinander über und können damit nicht mehr gewichtstreu sein. Es ist nun weiter bekannt, die Austrittszeit der Gesamtgewichtsportionen dadurch zu verdoppeln, daß der Sammeltrichter als Doppeltrichter mit zwei ineinander angeordneten Trichtern ausgebildet wird und der Auslauf des inneren Trichters seitlich durch den äußeren Trichter geführt wird. Die ausgewählten Teilgewichtsportionen werden dann einmal in den äußeren Trichter und einmal in den inneren Trichter aus den mit Doppelklappen versehenen Wägebehältern entleert. In diesem Falle muß jedoch auf eine gleichzeitige Öffnung beider Klappen an den Wägebehältern zur Entleerung einer Teilgewichtsportion verzichtet werden, weil jeweils nur eine Klappe des doppelklappigen Wägebehälters zum Entleeren der Einzelwaage in den inneren oder äußeren Trichter verwendet werden kann. Andererseits ist ein doppelklappiges Öffnen der Wägebehälter aber bei schlecht fließenden Produkten äußerst wichtige, um eine schnelle und restlose Entleerung der Teilgewichtsportion zu erreichen und so eine gewichtstreue Gesamtgewichtsportion zu garantieren.

Einer Weiterbildung der Erfindung liegt daher die Aufgabe zugrunde, bei Kombinationswaagen mit einem als Doppeltrichter ausgebildeten Sammeltrichter ein doppelklappiges Öffnen der Wägebehälter zu ermöglichen.

Diese Aufgabe wird erfindungsgemäß dadurch gelöst, daß die Rutschen in drei Stellungen schwenkbar sind, in denen sie die Teilgewichtsportionen in den einen oder den anderen Trichter des Doppeltrichters oder auf das neben dem Doppeltrichter angeordnete Fördermittel abgeben.

Es versteht sich, daß die spezielle Teilaufgabe auch dadurch gelöst werden kann, daß die Rutschen lediglich in zwei Stellungen schwenkbar sind, in denen sie die Teilgewichtsportionen nur in den einen oder den anderen Trichter des Doppeltrichters abgeben.

Das Fördermittel ist vorteilhaft als ringförmig um den Sammeltrichter angeordnete Schwingförderrinne ausgebildet und kann in einer zweckmäßigen Ausführungsform der Erfindung mit dem Sammeltrichter fest verbunden sein.

Erforderlichenfalls ist es auch möglich, das Fördermittel als geradlinige Rinne, Rutsche oder als Förderband auszubilden.

Die Rutschen sind vorteilhaft pneumatisch, hydraulisch oder elektromotorisch schwenkbar.

Weiter sind die Rutschen und/oder der Sammeltrichter zweckmäßig durch Schwingfördermagneten in Vibration setzbar.

Vorteilhafte Weiterbildungen der Erfindung bestehen darin, daß die Wägebehälter als doppelklappige Kunststoffbehälter ausgebildet sind, und daß die Rutschen und/oder der Sammeltrichter aus Kunststoff sind.

Hiermit läßt sich nicht nur ein ruhigeres Arbeiten der Kombinationswaage erreichen, sondern die Genauigkeit, Schnelligkeit und ungehinderte Abgabe von Teil-und Gesamtgewichtsportionen wird erheblich gefördert.

Die Erfindung ist im folgenden an Ausführungsbeispielen und anhand der Zeichnung näher erläutert. In der Zeichnung zeigen

Fig. 1 eine schematische Darstellung eines Ausführungsbeispiels der erfindungsgemäßen Kombinationswaage mit einem eintrichttrigen Sammeltrichter, und

Fig. 2 eine schematische Darstellung eines weiteren Ausführungsbeispiels der erfindungsgemäßen Kombinationswaage mit Doppeltrichter.

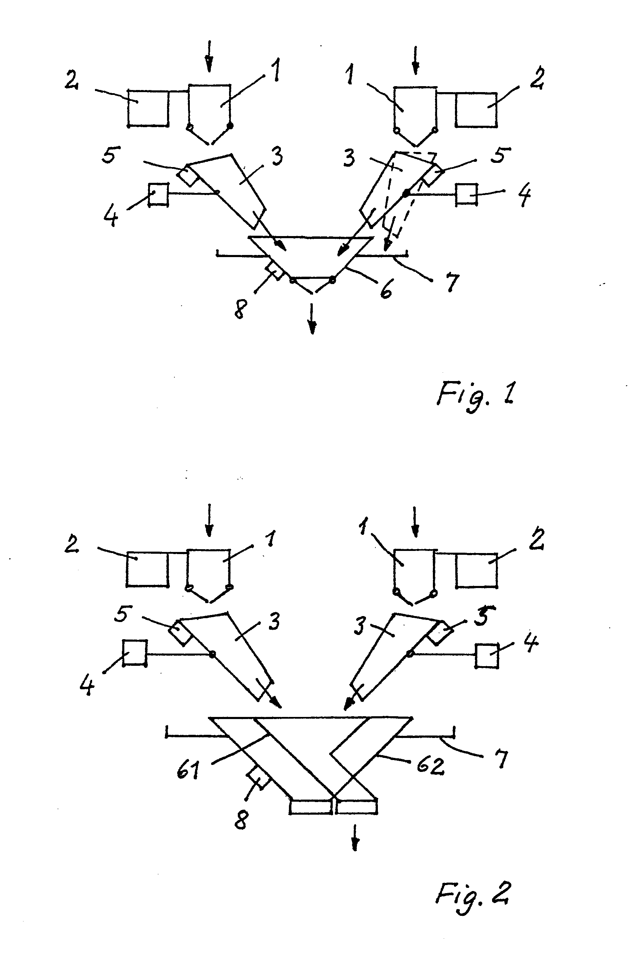

Bei der in Fig. 1 dargestellten Kombinationswaage sind mehrere Wägebehälter 1 mit zugehörigen Einzelwaagen 2 kreisförmig angeordnet und erhalten über nicht dargestellte, ansich bekannte Dosiereinrichtungen ihre Teilgewichtsportionen. Die Wägebehälter 1 sind vorteilhaft als doppelklappige Wägebehälter aus Kunststoff ausgebildet. Unter jedem Wägebehälter 1 ist eine rinnenförmige Rutsche 3 angeordnet. Jede der Rutschen 3 ist mittels eines Schwenkmechanismus 4, welcher pneumatisch, hydraulisch oder elektromotorisch sein kann, aus einer Grundstellung in eine zweite Stellung schwenkbar. Zweckmäßig kann jede Rutsche 3 durch einen Schwingfördermagneten 5 in Vibration gesetzt werden.

In einer ersten Grundstellung führt jede Rutsche 3 von den Wägebehältern 1 abgegebene Teilgewichtsportionen in einen Sammeltrichter 6, der, wie auch die Rutschen 3, zweckmäßig aus Kunststoff ausgebildet sein kann.

Am oberen Ende des Sammeltrichters 6 ist eine diesen ringförmig umgebende und zweckmäßig mit dem Sammeltrichter 6 verbundene Schwingförderrinne 7 angeordnet. Ein Schwingfördermagnet 8 an dem Sammeltrichter 6 setzt vorteilhaft diesen in Vibration.

Mittels des Schwenkmechanismus 4 kann jede Rutsche 3 in eine zweite Stellung (gestrichelt angedeutet) geschwenkt werden, in der sie Teilgewichtsportionen aus dem zugehörigen Wägebehälter 1 statt in den Sammeltrichter 6 zur Bildung einer Gesamtgewichtsportion in die Schwingförderrinne 7 abgibt.

Fig. 2 zeigt in schematischer Darstellung eine Kombinationswaage mit Doppeltrichter als Sammeltrichter. Hier ist der Sammeltrichter aus einem inneren Trichter 61 und einem äußeren Trichter 62 ausgebildet, welche jeweils taktweise mit Teilgewichtsportionen beschickt werden. Die Rutschen 3 weisen hier eine erste Grundstellung für die Beschickung des inneren Trichters 61, eine zweite Grundstellung für die Beschickung des äußeren Trichters 62 und eine dritte Stellung für die Beschickung der Schwingförderrinne 7 auf. Bei jeder Beschickung der Rutschen 3 können hier beide Klappen der Wägebehälter 1 geöffnet werden, so daß ein schnelles und vollständiges Austreten der Teilgewichtsportionen gewährleistet ist.

Es versteht sich, daß, falls keine Schwingförderrinne 7 vorgesehen ist, die Rutschen 3 lediglich zwischen ihren beiden Grundstellungen zur Beschickung des inneren Trichters 61 und des äußeren Trichters 62 hin-und herbewegt werden müssen.

### Ansprüche

1. Kombinationswaage mit mehreren Einzelwaagen (2) mit Wägebehältern (1), deren Teilgewichtsportionen von einem Rechner ausgewählt kombiniert zur Bildung einer Gesamtgewichtsportion in einen Sammeltrichter (6; 61, 62) abgegeben und von diesem einer Verpackungsmaschine zugeführt werden,
dadurch **gekennzeichnet,** daß unter den Wägebehältern (1) und über dem Sammeltrichter - (6; 61, 62) Rutschen (3) angeordnet sind, und daß die Rutschen (3) in wenigstens zwei Stellungen - schwenkbar sind, in denen sie die Teilgewichtsportionen entweder in den Sammeltrichter (6; 61, 62) oder auf ein neben dem Sammeltrichter (6; 61, 62) angeordnetes Fördermittel (7) abgeben.

2. Kombinationswaage nach Anspruch 1,
dadurch **gekennzeichnet,** daß ein Schwenken jeder Rutsche (3) in die Stellung über dem Fördermittel (7) und Entleerung des zugehörigen Wägebehälters (1) gesteuert durch den Rechner jeweils dann erfolgt, wenn der betreffende Wägebehälter (1) eine einstellbare Anzahl von Wägevorgängen nicht zur Abgabe seiner Teilgewichtsportion herangezogen worden ist.

3. Kombinationswaage nach Anspruch 1 oder 2, mit einem als Doppeltrichter (61, 62) ausgebildeten Sammeltrichter,

dadurch **gekennzeichnet,** daß die Rutschen in drei Stellungen schwenkbar sind, in denen sie die Teilgewichtsportionen in den einen (61) oder den anderen (62) Trichter des Doppeltrichters (61, 62) oder auf das neben dem Doppeltrichter (61, 62) angeordnete Fördermittel (7) abgeben.

4. Kombinationswaage nach einem der vorhergehenden Ansprüche,
dadurch **gekennzeichnet,** daß das Fördermittel als ringförmig um den Sammeltrichter (6; 61, 62) angeordnete Schwingförderrinne (7) ausgebildet ist.

5. Kombinationswaage nach Anspruch 4,
dadurch **gekennzeichnet,** daß die Schwingförderrinne (7) mit dem Sammeltrichter (6; 61, 62) fest verbunden ist.

6. Kombinationswaage nach einem der Ansprüche 1 bis 3,
dadurch **gekennzeichnet,** daß das Fördermittel als geradlinige Rinne, Rutsche oder als Förderband ausgebildet ist.

7. Kombinationswaage nach einem der vorhergehenden Ansprüche,
dadurch **gekennzeichnet,** daß die Rutschen (3) pneumatisch, hydraulisch oder elektromotorisch - schwenkbar sind.

8. Kombinationswaage nach einem der vorhergehenden Ansprüche,
dadurch **gekennzeichnet,** daß die Rutschen (3) und/oder der Sammeltrichter (6; 61, 62) durch Schwingfördermagneten in Vibration setzbar sind.

9. Kombinationswaage nach einem der vorhergehenden Ansprüche,
dadurch **gekennzeichnet,** daß die Wägebehälter (1) als doppelklappige Kunststoffbehälter ausgebildet sind.

10. Kombinationswaage nach einem der vorhergehenden Ansprüche,
dadurch **gekennzeichnet,** daß die Rutschen (3) und/oder der Sammeltrichter (6; 61, 62) aus Kunststoff sind.

Fig. 1

Fig. 2